# EUROPÄISCHE PATENTANMELDUNG

(11) **EP 1 273 478 A2**
(43) Veröffentlichungstag der Anmeldung: **08.01.2003**
(21) Anmeldenummer: 02013814.5
(22) Anmeldetag: 21.06.2002
(51) Int. Cl.: B60Q 1/48

(54) **Rangierhilfe zur Verwendung in einem Fahrzeug**

(30) Priorität: 22.06.2001 DE 20110339 U
(71) Anmelder: MEKRA Lang GmbH & Co. KG, 90765 Fürth (DE)
(72) Erfinder: Lang, Heinrich, 91465 Ergersheim (DE); Witzke, Michael, 91522 Ansbach (DE); Emmert, Harald, 91438 Bad Windsheim (DE); Heller, Uwe, 91438 Bad Windsheim (DE)
(74) Vertreter: Winter, Brandl, Fürniss, Hübner, Röss, Kaiser, Polte Partnerschaft

(57) **Zusammenfassung**

Erfindungsgemäß wird eine Rangierhilfe zur Verwendung in einem Fahrzeug (1), insbesondere einem Lastkraftwagen, geschaffen, wobei die Rangierhilfe eine Erfassungseinrichtung (3) zum Erfassen einer um das Fahrzeug (1) herum vorhandenen Situation, und eine Unterrichtungseinrichtung (2) aufweist, die getrennt von der Erfassungseinrichtung (3) vorgesehen ist und einen Fahrer über die um das Fahrzeug (1) herum vorhandene Situation unterrichtet, wenn ein die um das Fahrzeug (1) herum vorhandene Situation anzeigendes Signal (S₁) drahtlos von der Erfassungseinrichtung (3) zu der Unterrichtungseinrichtung (2) übertragen wird.

## Beschreibung

Die vorliegende Erfindung betrifft eine Rangierhilfe, wie zum Beispiel eine Parkhilfe, zur Verwendung in einem Fahrzeug und insbesondere einem Lastkraftwagen.

Im Stand der Technik ist eine Parkhilfe für Kraftfahrzeuge bekannt, die eine Erfassungseinrichtung an einem Heck des Kraftfahrzeugs und eine Unterrichtungseinrichtung in oder an einer Fahrerkabine des Kraftfahrzeugs aufweist. Die Erfassungseinrichtung weist eine Sensoreinrichtung und eine Steuereinrichtung auf. Von der Unterrichtungseinrichtung können Steuersignale zu der Steuereinrichtung zum Steuern der Sensoreinrichtung übertragen werden. Weiterhin können eine Situation hinter dem Kraftfahrzeug anzeigende Signale, die von der Sensoreinrichtung, wie zum Beispiel einer Radarsensoreinrichtung oder Bildaufnahmeeinrichtung, erfaßt werden, zu der Unterrichtungseinrichtung übertragen werden und somit den Fahrer über die hinter dem Kraftfahrzeug vorhandene Situation unterrichten. Dies kann zum Beispiel in dem Fall der Bildaufnahmeeinrichtung mittels einer in der Unterrichtungseinrichtung vorhandenen Bildanzeigeeinrichtung oder in dem Fall der Radarsensoreinrichtung mittels einer in der Unterrichtungseinrichtung vorhandenen akustischen Warneinrichtung durchgeführt werden.

Auf die zuvor beschriebene Weise wird der Fahrer beim Rückwärtsfahren, wie zum Beispiel beim Einparken, unterstützt und kann zum Beispiel ein Anfahren an ein Hindernis, wie zum Beispiel ein parkendes Kraftfahrzeug oder dergleichen, vermeiden.

Bei der zuvor beschriebenen Parkhilfe im Stand der Technik wird eine Verbindung zwischen der Unterrichtungseinrichtung und der Erfassungseinrichtung mittels Leitungen durchgeführt.

Dadurch ergeben sich Nachteile hinsichtlich des Montageaufwands und der Arbeitszeit, wenn eine derartige Parkhilfe nachgerüstet werden soll.

Wenn eine derartige Parkhilfe an einem Lastkraftwagen mit Anhänger oder einem Sattelzug mit Auflieger verwendet werden soll, ergibt sich das weitere Problem, daß zwischen der sich in oder an dem Lastkraftwagen bzw. Sattelzug angeordneten Unterrichtungseinrichtung und der sich an einem Heck des Anhängers bzw. Aufliegers angeordneten Erfassungseinrichtung eine lösbare Verbindung vorgesehen sein muß, um den Anhänger bzw. Auflieger abkoppeln oder wechseln zu können.

Die Aufgabe der vorliegenden Erfindung besteht demgemäß darin, eine Rangierhilfe, wie zum Beispiel eine Parkhilfe, zur Verwendung in einem Fahrzeug, wie zum Beispiel einem Kraftfahrzeug und insbesondere einem Lastkraftwagen, zu schaffen, die eine einfache Montage und eine hohe Flexibilität sicherstellt.

Diese Aufgabe wird erfindungsgemäß durch eine Rangierhilfe zur Verwendung in einem Fahrzeug, insbesondere einem Lastkraftwagen, gelöst, wobei die Rangierhilfe eine Erfassungseinrichtung zum Erfassen einer um das Fahrzeug herum vorhandenen Situation, und eine Unterrichtungseinrichtung aufweist, die getrennt von der Erfassungseinrichtung vorgesehen ist und einen Fahrer über die um das Fahrzeug herum vorhandene Situation unterrichtet, wenn ein die um das Fahrzeug herum vorhandene Situation anzeigendes Signal drahtlos von der Erfassungseinrichtung zu der Unterrichtungseinrichtung übertragen wird.

Dadurch, daß das Übertragen des die um das Fahrzeug herum vorhandene Situation anzeigenden Signals drahtlos durchgeführt wird, ist keine Verbindung mittels Leitungen zwischen der Unterrichtungseinrichtung und der Erfassungseinrichtung notwendig, wodurch eine Nachrüstbarkeit sichergestellt wird, da lediglich die Unterrichtungseinrichtung und die Erfassungseinrichtung nachgerüstet werden müssen und kein zusätzliches Verlegen von Leitungen erforderlich ist.

Wesentliche Vorteile ergeben sich dann, wenn die Rangierhilfe bei einem Lastkraftwagen mit Anhänger oder einem Sattelzug mit Auflieger verwendet wird, da in diesem Fall keine lösbare Verbindung zwischen dem Lastkraftwagen und dem Anhänger bzw. dem Sattelzug und dem Auflieger vorhanden sein muß. Dadurch wird ein Abkoppeln oder Wechseln des Anhängers bzw. Aufliegers erheblich vereinfacht.

Gemäß einer Ausgestaltung der vorliegenden Erfindung ist die Unterrichtungseinrichtung in oder an einer Fahrerkabine des Fahrzeugs angeordnet und ist die Erfassungseinrichtung an einem Heck des Fahrzeugs angeordnet.

Gemäß einer weiteren Ausgestaltung der vorliegenden Erfindung sind die Erfassungseinrichtung und/oder die Unterrichtungseinrichtung abnehmbar angeordnet.

Gemäß einer weiteren Ausgestaltung der vorliegenden Erfindung ist die Erfassungseinrichtung an einem von einem Zugteil des Fahrzeugs abkoppelbaren Heckteil des Fahrzeugs angeordnet.

Gemäß einer weiteren Ausgestaltung der vorliegenden Erfindung werden von der Unterrichtungseinrichtung zu der Erfassungseinrichtung drahtlos Signale zum Steuern und/oder Programmieren der Erfassungseinrichtung übertragen.

Gemäß einer weiteren Ausgestaltung der vorliegenden Erfindung wird das Steuern und/oder Programmieren manuell und/oder automatisch durchgeführt.

Gemäß einer weiteren Ausgestaltung der vorliegenden Erfindung wird das Übertragen zwischen der Unterrichtungseinrichtung und der Erfassungseinrichtung per Funk durchgeführt.

Gemäß einer weiteren Ausgestaltung der vorliegenden Erfindung wird das Übertragen zwischen der Unterrichtungseinrichtung und der Erfassungseinrichtung analog oder digital durchgeführt.

Gemäß einer weiteren Ausgestaltung der vorliegenden Erfindung wird das Übertragen zwischen der Unterrichtungseinrichtung und der Erfassungseinrichtung mittels des Standards DECT oder Bluetooth™ durchgeführt.

Gemäß einer weiteren Ausgestaltung der vorliegenden Erfindung weist die Erfassungseinrichtung eine Sensoreinrichtung und eine Steuereinrichtung auf.

Gemäß einer weiteren Ausgestaltung der vorliegenden Erfindung weist die Sensoreinrichtung eine Bildaufnahmeeinrichtung, eine Radarsensoreinrichtung, eine Ultraschallsensoreinrichtung, eine Infrarotsensoreinrichtung, eine elektromagnetische Sensoreinrichtung und/oder eine elektrooptische Sensoreinichtung auf.

Gemäß einer weiteren Ausgestaltung der vorliegenden Erfindung weist die Unterrichtungseinrichtung eine Bildanzeigeeinrichtung, eine akustische Warneinrichtung und/oder eine visuelle Warneinrichtung auf.

Gemäß einer weiteren Ausgestaltung der vorliegenden Erfindung ist die Anzeigeeinrichtung in einen Rückspiegel des Fahrzeugs integriert oder an diesem angebracht.

Gemäß einer weiteren Ausgestaltung der vorliegenden Erfindung wird ein eindeutiges Zuordnen zwischen der Unterrichtungseinrichtung und der Erfassungseinrichtung bzw. ein Synchronisieren dieser beiden Vorrichtungen mittels eines beiden Einrichtungen gleichzeitig zur Verfügung stehenden Erkennungssignals durchgeführt.

Gemäß einer weiteren Ausgestaltung der vorliegenden Erfindung ist das Erkennungssignal ein Rückfahrsignal.

Gemäß einer weiteren Ausgestaltung der vorliegenden Erfindung steht das Rückfahrsignal nach einem Einlegen eines Rückwärtsgangs zur Verfügung und wird der Erfassungseinrichtung von einem Rückfahrscheinwerfer des Fahrzeugs zugeführt.

Gemäß einer weiteren Ausgestaltung der vorliegenden Erfindung ist das Erkennungssignal ein ein Einschalten der Zündung des Fahrzeugs anzeigendes Signal.

Gemäß einer weiteren Ausgestaltung der vorliegenden Erfindung steht das ein Einschalten der Zündung anzeigende Signal nach einem Einschalten der Zündung des Fahrzeugs zur Verfügung und wird der Erfassungseinrichtung von einer Komponente zugeführt, die nach einem Einschalten der Zündung des Fahrzeugs mit Energie versorgt wird.

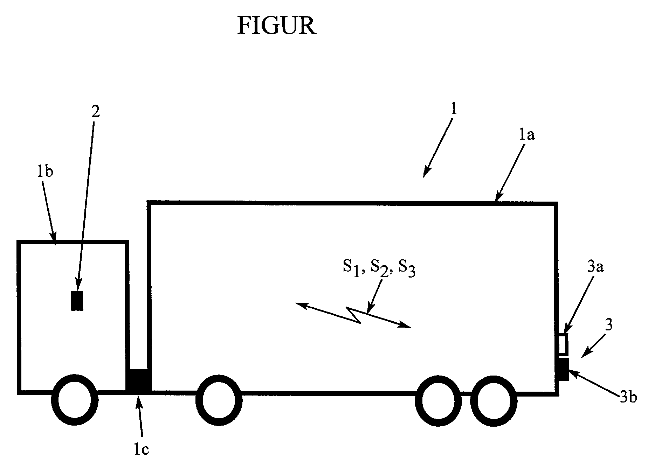

Die vorliegende Erfindung wird nachstehend anhand eines Ausführungsbeispiels unter Bezugnahme auf die beiliegende Zeichnung näher erläutert.

Die einzige Figur zeigt eine an einem Fahrzeug angeordnete Rangierhilfe, wie zum Beispiel eine Parkhilfe, gemäß dem Ausführungsbeispiel der vorliegenden Erfindung, die an einem Fahrzeug, wie zum Beispiel einem Kraftfahrzeug angewendet wird.

Es ist anzumerken, daß, obgleich in der Figur symbolisch ein Sattelzug mit Auflieger dargestellt ist, die Rangierhilfe gemäß dem Ausführungsbeispiel der vorliegenden Erfindung ebenso an einem beliebigen anderen Fahrzeug, wie zum Beispiel einem Personenkraftwagen, einem Lastkraftwagen oder einem Lastkraftwagen mit Anhänger, oder aber auch einem Wasserfahrzeug oder einem Luftfahrzeug angewendet werden kann. Demgemäß sind die Begriffe in der nachfolgenden Beschreibung allgemein gehalten.

Es wird auf die Figur verwiesen. Das Bezugszeichen 1 bezeichnet ein Fahrzeug, das Bezugszeichen 1a bezeichnet ein abkoppelbares Heckteil das Fahrzeugs 1, das Bezugszeichen 1b bezeichnet ein Zugteil des Fahrzeugs 1, das Bezugszeichen 1c bezeichnet einen Kopplungsmechanismus des Fahrzeugs 1, das Bezugszeichen 2 bezeichnet eine Unterrichtungseinrichtung, das Bezugszeichen 3 bezeichnet eine Erfassungseinrichtung, das Bezugszeichen 3a bezeichnet eine Sensoreinrichtung der Erfassungseinrichtung 3, das Bezugszeichen 3b bezeichnet eine Steuervorrichtung der Erfassungseinrichtung 3 und die Bezugszeichen S₁ bis S₃ bezeichnen Signale.

Die Erfassungseinrichtung 3 dient in diesem Ausführungsbeispiel dazu, eine Situation hinter dem Fahrzeug 1 zu erfassen und ist an einem Heck des Fahrzeugs 1 angeordnet. Es ist jedoch je nach Anwendungszweck auch möglich, die Erfassungseinrichtung 3 an einer Vorderseite des Fahrzeugs 1, an einer beliebigen Seite des Fahrzeugs 1 usw. anzuordnen. Ferner können mehrere Erfassungseinrichtungen 3 an unterschiedlichen Stellen des Fahrzeugs 1 angeordnet sein. Allgemein ist es also mittels einer oder mehreren Erfassungseinrichtungen 3 möglich, je nach erwünschtem Anwendungszweck eine jeweilige um das Fahrzeug 1 herum vorhandene Situation zu erfassen. Die Unterrichtungseinrichtung 2 ist in oder an der Fahrerkabine 1b des Fahrzeugs 1 und demgemäß getrennt von der Erfassungseinrichtung 3 angeordnet.

In dem Fall, in dem das Fahrzeug 1 aus dem Zugteil 1b und dem von dem Zugteil mittels des Kopplungsmechanismus 1c abkoppelbaren Heckteils 1b besteht, wie dies zum Beispiel bei einem Sattelzug mit Auflieger der Fall ist, ist die Erfassungseinrichtung 3 an dem abkoppelbaren Heckteil 1a angeordnet.

Die Unterrichtungseinrichtung 2 unterrichtet einen Fahrer über die Situation hinter dem Fahrzeug 1, die von der Erfassungseinrichtung 3 erfaßt wird, wenn ein die Situation hinter dem Fahrzeug 1 anzeigendes Signal S₁ drahtlos von der Erfassungseinrichtung 3 zu der Unterrichtungseinrichtung 2 übertragen wird.

Die Erfassungseinrichtung 3 weist zum Beispiel die Sensoreinrichtung 3a, wie zum Beispiel eine als Bildaufnahmeeinrichtung dienende Videokamera, eine Radarsensoreinrichtung, eine Ultraschallsensoreinrichtung, eine Infrarotsensoreinrichtung, eine elektromagnetische Sensoreinrichtung und/oder eine elektrooptische Sensoreinrichtung und die Steuereinrichtung 3b auf. Ferner weist die Unterrichtungseinrichtung 2 zum Beispiel eine Bildanzeigeinrichtung, eine akustische Warneinrichtung und/oder eine visuelle Warneinrichtung, wie zum Beispiel eine LED, auf. Die Anzeigeeinrichtung ist zum Beispiel in einen Rückspiegel des Fahrzeugs 1 integriert oder an diesem angebracht.

Zum Beispiel werden im Fall der Videokamera drahtlos Bildsignale als die die Situation hinter dem Fahrzeug 1 anzeigenden Signale S₁ zu der Bildanzeigeeinrichtung übertragen und auf dieser angezeigt, wodurch dem Fahrer die Situation hinter dem Fahrzeug 1 auf der Bildanzeigeeinrichtung angezeigt wird und dieser somit einen Unfall beim Rückwärtsfahren, wie zum Beispiel ein Anfahren eines parkenden Fahrzeugs oder dergleichen, vermeiden kann.

In dem Fall der Radarsensoreinrichtung, der Ultraschallsensoreinrichtung, der Infrarotsensoreinrichtung, der elektromagnetischen Sensoreinrichtung und/oder der elektrooptischen Sensoreinrichtung kann mittels dieser bzw. diesen ein bestimmter Bereich hinter dem Fahrzeug 1 abgetastet werden. Wenn in diesem bestimmten Bereich ein Hindernis vorhanden ist, wird dies dadurch erkannt, daß als das die Situation hinter dem Fahrzeug 1 anzeigende Signal S₁ ein Signal von der Radarsensoreinrichtung, der Ultraschallsensoreinrichtung, der Infrarotsensoreinrichtung, der elektromagnetischen Sensoreinrichtung und/oder der elektrooptischen Sensoreinrichtung drahtlos zu der akustischen Warneinrichtung und/oder der visuellen Warneinrichtung übertragen wird, wodurch der Fahrer über das Hindernis hinter dem Fahrzeug 1 unterrichtet wird und einen Unfall beim Rückwärtsfahren, wie zum Beispiel ein Anfahren eines parkenden Fahrzeugs oder dergleichen, vermeiden kann.

Ferner besteht die Möglichkeit, daß neben dem drahtlosen Übertragen des die Situation hinter dem Fahrzeug 1 anzeigenden Signals S₁ weitere Signale S₂ drahtlos von der Erfassungseinrichtung 3 zu der Unterrichtungseinrichtung 2 oder von der Unterrichtungseinrichtung 2 zu der Erfassungseinrichtung 3 übertragen werden können.

Derartige S₂ Signale können zum Beispiel Signale sein, die zum manuellen und/oder automatischen Steuern und/oder Programmieren der Erfassungseinrichtung 3 von der Unterrichtungseinrichtung 2 zu der Erfassungseinrichtung 3 übertragen werden. Zum Beispiel kann ein derartiges Signal S₂ ein Steuersignal zum Einstellen einer Aufnahmeposition der Videokamera sein, welches entweder durch manuelle Betätigung des Fahrers oder automatisch erzeugt wird. Ein automatisches Erzeugen kann zum Beispiel derart durchgeführt werden, daß in dem Fall, in dem die Radarsensoreinrichtung, die Ultraschallsensoreinrichtung, die Infrarotsensoreinrichtung, die elektromagnetische Sensoreinrichtung und/oder die elektrooptische Sensoreinrichtung ein Signal S₁ zu der Unterrichtungseinrichtung 2 übertragen, automatisch ein Signal S₂ erzeugt wird, mittels welchem die Videokamera anhand der Steuereinrichtung 3b zu einer Position geschwenkt wird, in der die Radarsensoreinrichtung, die Ultraschallsensoreinrichtung, die Infrarotsensoreinrichtung, die elektromagnetische Sensoreinrichtung und/oder die eletrooptische Sensoreinrichtung ein Hindernis erkannt haben, um den Fahrer auch optisch mittels der Anzeigeeinrichtung über die Art des Hindernisses zu unterrichten.

Das drahtlose Übertragen der Signale S₂ zwischen der Unterrichtungseinrichtung 2 und der Erfassungseinrichtung 3 kann analog oder digital zum Beispiel per Funk durchgeführt werden. Ein analoges Übertragen ist in dem Fall ausreichend, in dem wenig Störungen von anderen Funksystemen zu erwarten sind. In dem Fall, in dem eine höhere Störsicherheit erforderlich ist, ist ein digitales Übertragen von Vorteil, wobei zum Beispiel die Standards DECT, Bluetooth™ oder andere geeignete Verfahren oder Standards angewendet werden können. Auf alle Fälle sollte ein Übertragungsverfahren verwendet werden, daß bidirektional ist.

Um ein eindeutiges Zuordnen zwischen der Unterrichtungseinrichtung 2 und der Erfassungseinrichtung 3 bzw. ein Synchronisieren dieser beiden Einrichtungen sicherzustellen, wird ein Zuordnen bzw. Synchronisieren dieser beiden Einrichtungen mittels eines Erkennungssignals S₃ durchgeführt, daß diesen beiden Einrichtungen gleichzeitig zur Verfügung steht. Dies kann zum Beispiel ein Rückfahrsignal sein, das nach einem Einlegen eines Rückwärtsgangs zur Verfügung steht und der Erfassungseinrichtung 3 von einem Rückfahrscheinwerfer des Fahrzeugs 1 zugeführt wird, wodurch auch in diesem Fall keine Leitung von der Unterrichtungseinrichtung 2 zu der Erfassungseinrichtung 3 erforderlich ist. Ferner besteht ebenso die Möglichkeit, als das Erkennungssignal S₃ ein ein Einschalten der Zündung des Fahrzeugs 1 anzeigendes Signal zu verwenden, das nach einem Einschalten der Zündung des Fahrzeugs 1 zur Verfügung steht und der Erfassungseinrichtung 3 von einer Komponente zugeführt wird, die nach einem Einschalten der Zündung des Fahrzeugs 1 mit Energie versorgt wird, wodurch auch in diesem Fall keine Leitung von der Unterrichtungseinrichtung 2 zu der Erfassungseinrichtung 3 erforderlich ist.

In der vorhergehenden Beschreibung ist eine Rangierhilfe zur Verwendung in einem Fahrzeug, insbesondere einem Lastkraftwagen, beschrieben worden, wobei die Rangierhilfe eine Erfassungseinrichtung zum Erfassen einer um das Fahrzeug herum vorhandenen Situation, und eine Unterrichtungseinrichtung aufweist, die getrennt von der Erfassungseinrichtung vorgesehen ist und einen Fahrer über die um das Fahrzeug herum vorhandene Situation unterrichtet, wenn ein die um das Fahrzeug herum vorhandene Situation anzeigendes Signal drahtlos von der Erfassungseinrichtung zu der Unterrichtungseinrichtung übertragen wird.

## Patentansprüche

**1.** Rangierhilfe zur Verwendung in einem Fahrzeug (1), insbesondere einem Lastkraftwagen, wobei die Rangierhilfe aufweist:
eine Erfassungseinrichtung (3) zum Erfassen einer um das Fahrzeug (1) herum vorhandenen Situation; und
eine Unterrichtungseinrichtung (2), die getrennt von der Erfassungseinrichtung (3) vorgesehen ist und einen Fahrer über die um das Fahrzeug (1) herum vorhandene Situation unterrichtet, wenn ein die um das Fahrzeug (1) herum vorhandene Situation anzeigendes Signal (S₁) drahtlos von der Erfassungseinrichtung (3) zu der Unterrichtungseinrichtung (2) übertragen wird.

**2.** Rangierhilfe nach Anspruch 1, wobei die Unterrichtungseinrichtung (2) in oder an einer Fahrerkabine des Fahrzeugs (1) angeordnet ist und die Erfassungseinrichtung (3) an einem Heck des Fahrzeugs (1) angeordnet ist.

**3.** Rangierhilfe nach Anspruch 2, wobei die Erfassungseinrichtung (3) und/oder die Unterrichtungseinrichtung (2) abnehmbar angeordnet sind.

**4.** Rangierhilfe nach einem der vorhergehenden Ansprüche, wobei die Erfassungseinrichtung (3) an einem von einem Zugteil (1b) des Fahrzeugs (1) abkoppelbaren Heckteil (1a) des Fahrzeugs (1) angeordnet ist.

**5.** Rangierhilfe nach einem der vorhergehenden Ansprüche, wobei von der Unterrichtungseinrichtung (2) zu der Erfassungseinrichtung (3) drahtlos Signale (S₂) zum Steuern und/oder Programmieren der Erfassungseinrichtung (3) übertragen werden.

**6.** Rangierhilfe nach Anspruch 5, wobei das Steuern und/oder Programmieren manuell und/oder automatisch durchgeführt wird.

**7.** Rangierhilfe nach einem der vorgehenden Ansprüche, wobei das Übertragen zwischen der Unterrichtungseinrichtung (2) und der Erfassungseinrichtung (3) per Funk durchgeführt wird.

**8.** Rangierhilfe nach einem der vorhergehenden Ansprüche, wobei das Übertragen zwischen der Unterrichtungseinrichtung (2) und der Erfassungseinrichtung (3) analog oder digital durchgeführt wird.

**9.** Rangierhilfe nach einem der vorhergehenden Ansprüche, wobei das Übertragen zwischen der Unterrichtungseinrichtung (2) und der Erfassungseinrichtung (3) mittels des Standards DECT oder Bluetooth™ durchgeführt wird.

**10.** Rangierhilfe nach einem der vorhergehenden Ansprüche, wobei die Erfassungseinrichtung (3) eine Sensoreinrichtung (3a) und eine Steuereinrichtung (3b) aufweist.

**11.** Rangierhilfe nach Anspruch 10, wobei die Sensoreinrichtung (3a) eine Bildaufnahmeeinrichtung, eine Radarsensoreinrichtung, eine Ultraschallsensoreinrichtung, eine Infrarotsensoreinrichtung, eine elektromagnetische Sensoreinrichtung und/oder eine elektrooptische Sensoreinichtung aufweist.

**12.** Rangierhilfe nach einem der vorhergehenden Ansprüche, wobei die Unterrichtungseinrichtung (2) eine Bildanzeigeeinrichtung, eine akustische Warneinrichtung und/oder eine visuelle Warneinrichtung aufweist.

**13.** Rangierhilfe nach Anspruch 12, wobei die Anzeigeeinrichtung in einen Rückspiegel des Fahrzeugs (1) integriert ist oder an diesem angebracht ist.

**14.** Rangierhilfe nach einem der vorhergehenden Ansprüche, wobei ein eindeutiges Zuordnen zwischen der Unterrichtungseinrichtung (2) und der Erfassungseinrichtung (3) bzw. ein Synchronisieren dieser beiden Vorrichtungen mittels eines beiden Einrichtungen gleichzeitig zur Verfügung stehenden Erkennungssignals (S₃) durchgeführt wird.

**15.** Rangierhilfe nach Anspruch 14, wobei das Erkennungssignal (S₃) ein Rückfahrsignal ist.

**16.** Rangierhilfe nach Anspruch 15, wobei das Rückfahrsignal nach einem Einlegen eines Rückwärtsgangs zur Verfügung steht und der Erfassungseinrichtung (3) von einem Rückfahrscheinwerfer des Fahrzeugs (1) zugeführt wird.

**16.** Rangierhilfe nach Anspruch 14, wobei das Erkennungssignal (S₃) ein ein Einschalten der Zündung des Fahrzeugs (1) anzeigendes Signal ist.

**17.** Rangierhilfe nach Anspruch 16, wobei das ein Einschalten der Zündung anzeigende Signal nach einem Einschalten der Zündung des Fahrzeugs (1 zur Verfügung steht und der Erfassungseinrichtung (3) von einer Komponente zugeführt wird, die nach einem Einschalten der Zündung des Fahrzeugs (1) mit Energie versorgt wird.
